# EUROPEAN PATENT SPECIFICATION

(11) **EP 3 131 166 B1**
(45) Date of publication and mention of the grant of the patent: **13.02.2019**
(21) Application number: 14888645.0
(22) Date of filing: 30.12.2014
(51) Int. Cl.: H02H 3/087, H01H 33/59

(54) **PASSIVE HIGH-VOLTAGE DIRECT-CURRENT CIRCUIT BREAKER AND IMPLEMENTATION METHOD THEREFOR**
PASSIVER HOCHSPANNUNGSGLEICHSTROMSCHUTZSCHALTER UND IMPLEMENTIERUNGSVERFAHREN DAFÜR
DISJONCTEUR À COURANT CONTINU À HAUTE TENSION PASSIF ET SON PROCÉDÉ DE MISE EN OEUVRE

(30) Priority: 08.04.2014 CN 201410137412
(43) Date of publication of application: 15.02.2017
(73) Proprietor: State Grid Corporation of China (SGCC), Beijing 100031 (CN); State Grid Smart Grid Research Institute, Beijing 102211 (CN); North China Grid Company Limited, Beijing 100053 (CN)
(72) Inventor: ZHOU, Wandi, Beijing 102211 (CN); WEI, Xiaoguang, Beijing 102211 (CN); GAO, Chong, Beijing 102211 (CN); HE, Zhiyuan, Beijing 102211 (CN); ZHANG, Sheng, Beijing 102211 (CN)
(74) Representative: Vidon Brevets & Stratégie
(86) International application number: PCT/CN2014/095682
(87) International publication number: WO 2015/154537

(56) References cited:
- CN-A- 103 219 699
- CN-A- 103 280 763
- CN-A- 103 280 763
- CN-A- 103 337 851
- CN-A- 103 337 851
- CN-A- 103 457 258
- CN-A- 103 457 258

## Description

### Field of the Invention

The present invention relates to a direct-current circuit breaker, and specifically relates to a passive type high voltage DC circuit breaker and an implementation method thereof.

### Background of the Invention

As multi-end flexible direct current and direct current grid technologies based on voltage source converters (VSC) come into use, quick direct-current circuit breakers become one of key devices ensuring stable, safe and reliable operation of systems. In an alternating-current system, alternating current has two natural zero crossing points within a cycle, and the alternating-current circuit breaker breaks the current just using the natural zero crossing points of the current, whereas in a direct-current system, direct current does not have natural zero crossing points, so the direct current is more difficult to break than the alternating current.

The direct current is broken generally in three modes: I, based on a conventional alternating-current mechanical circuit breaker, an auxiliary circuit is added to superpose increasing oscillating current onto direct current at arc opening and breaking gaps, and the circuit is turned on or off when the current crosses zero, wherein the mechanical circuit breaker manufactured by using this principle cannot meet the requirements of a multi-end flexible direct-current power transmission system on breaking time; II, direct current is directly broken by a high-power turn-off power electronic device, and the solid-state circuit breaker manufactured by using this principle can meet the requirements of a multi-end flexible direct-current system on time, but has high loss in normal turn-on and poor economical efficiency; and III, a hybrid mode of a mechanical switch and a power electronic device is adopted, the mechanical switch is turned on in normal operation and turned off in fault, and current is transferred to the branch of the parallel-connected power electronic device by using the generated arc voltage and then broken by the power electronic device, wherein the circuit breaker based on the principle reduces the on-state loss and improves the breaking speed, but needs a large amount of full-controlled series-connected devices, so the manufacturing difficulty and the manufacturing cost are high, and when the short-circuit current exceeds the withstand current peak of a single full-controlled device, the cost is nearly doubled.

Furthermore, CN 103 337 851 A discloses a passive type high voltage DC circuit breaker according to the preamble of claim 1.

### Summary of the Invention

Aiming at the defects of the prior art, one aim of the present invention is to provide a passive type high voltage DC circuit breaker, and the other aim of the present invention is to provide an implementation method of the passive type high voltage DC circuit breaker. The circuit breaker of the present invention, which is circulated by high-speed mechanical switches and a few power electronic devices, has low on-state loss and strong through-current capability; and the circuit breaker mainly adopting half-controlled device thyristors is high in voltage tolerance, easy to connect in series, low in cost and strong in current breaking capability, does not need an auxiliary high-voltage isolating power supply, and is high in reliability.

The aims of the present invention are fulfilled by adopting the following technical solutions:
The present invention provides a passive type high voltage DC circuit breaker, according to claim 1.

Further, each full-controlled device module is composed of full-controlled devices inversely connected in series, and two ends of each full-controlled device are respectively inversely connected in parallel with a free-wheeling diode; the two groups of high-speed mechanical switches are expressed as high-speed mechanical switches K1 and K2, and the two groups of full-controlled devices are respectively expressed as a first full-controlled device, a second full-controlled device, a third full-controlled device and a fourth full-controlled device.

Further, the full-controlled device modules are composed of two groups of full-controlled devices inversely connected in parallel; and the two groups of full-controlled devices are respectively expressed as a fifth full-controlled device, a sixth full-controlled device, a seventh full-controlled device and an eighth full-controlled device.

Further, the full-controlled device modules have a full-bridge structure composed of four full-controlled devices and a capacitor C1, and are respectively expressed as a ninth full-controlled device module and a tenth full-controlled device module; the full-bridge structure includes two bridge arms, each bridge arm is composed of two full-controlled devices connected in series, and two ends of each full-controlled device are respectively inversely connected in parallel with a free-wheeling diode; and the capacitor C1 is connected between the midpoints of the two bridge arms. Further, the full-controlled devices include IGCT devices, IGBT devices and GTO devices.

Further, the thyristor valves are respectively a thyristor valve T1, a thyristor valve T2, a thyristor valve T3 and a thyristor valve T4, wherein the thyristor valve T1 and the thyristor valve T2 are inversely connected in series to form the first current transfer branch, and the thyristor valve T3 and the thyristor valve T4 are inversely connected in series to form the second current transfer branch.

Further, the nonlinear resistor is a lightning arrester.

The present invention further provides an implementation method of the passive type high voltage DC circuit breaker. As an improvement, when the full-controlled device modules are composed of full-controlled devices inversely connected in series, the implementation method includes:
1) when the direct-current system runs normally, the two groups of high-speed mechanical switches are turned on, the full-controlled devices in the full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
   (1) when the direct-current system has a grounding short-circuit fault at the right port of the circuit breaker, long trigger pulse is applied to the thyristor valve T1 in the first current transfer branch, meanwhile, the first and third full-controlled devices are blocked, then when the forward voltage is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the second full-controlled device, the turn-on time of the thyristor valve T1 is maintained to be not less than 2ms, and the high-speed mechanical switch K1 can generate enough open distance to tolerate recovery overvoltage of the direct-current system, and waits for a breaking command from the direct-current system or itself;
   (2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the second full-controlled device, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the fourth full-controlled device, the second and fourth full-controlled devices are blocked after the energy is released, and the high-speed mechanical switch K2 is broken; and
   (3) if the system determines that the action of the high-voltage direct-current circuit breaker is not needed, the high-speed mechanical switch K1 of the main branch is turned on again, the first and third full-controlled devices are triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

Further, when the full-controlled device modules are composed of full-controlled devices inversely connected in parallel, the implementation method includes:
1) when the direct-current system runs normally, the two groups of high-speed mechanical switches are turned on, the full-controlled devices in the full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
   (1) when the direct-current system has a grounding short-circuit fault at the right port of the circuit breaker, long trigger pulse is applied to the thyristor valve T1 in the first current transfer branch, meanwhile, the fifth and seventh full-controlled devices are blocked, then when the forward voltage is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the sixth full-controlled device, the turn-on time of the thyristor valve T1 is maintained to be not less than 2ms, and the high-speed mechanical switch K1 can generate enough open distance to tolerate recovery overvoltage of the direct-current system, and waits for a breaking command from the direct-current system or itself;
   (2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the sixth full-controlled device, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the eighth full-controlled device, the sixth and eighth full-controlled devices are blocked after the energy is released, and the high-speed mechanical switch K2 is broken; and
   (3) if the system determines that the action of the high-voltage direct-current circuit breaker is not needed, the high-speed mechanical switch K1 of the main branch is turned on again, the fifth and seventh full-controlled devices are triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

Further, when the full-controlled device modules adopt a full-bridge structure composed of four full-controlled devices and a capacitor C1, the implementation method includes:
1) when the direct-current system runs normally, the two groups of high-speed mechanical switches are turned on, the full-controlled devices in the ninth and tenth full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
   (1) when the direct-current system has a grounding short-circuit fault at the right port of the circuit breaker, long trigger pulse is applied to the thyristor valve T1 in the first current transfer branch, meanwhile, the ninth full-controlled device module is blocked, the current of the main branch charges the capacitor in the ninth full-controlled device module via the inversely parallel-connected diodes of the full-controlled devices, then when the voltage of the capacitor is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the tenth full-controlled device module, the turn-on time of the thyristor valve T1 is maintained to be not less than 2ms, and the high-speed mechanical switch K1 can generate enough open distance to tolerate recovery overvoltage of the direct-current system, and waits for a breaking command from the direct-current system or itself;
   (2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the tenth full-controlled device module, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the tenth full-controlled device module, the tenth full-controlled device module is blocked after the energy is released, and the high-speed mechanical switch K2 is broken; and
   (3) if the system determines that the action of the high-voltage direct-current circuit breaker is not needed, the high-speed mechanical switch K1 of the main branch is turned on again, the ninth full-controlled device module is triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

Compared with the prior art, the present invention has the following advantages:
The high-voltage direct-current circuit breaker provided by the present invention is simple in circuit topological structure, simple and convenient in control and flexible in application; energy required for injecting current to the capacitor can be obtained from the system, so that an auxiliary power supply is not needed, and the reliability of the device is improved; the adopted power electronic devices are mainly half-controlled thyristors, and the series technology is mature, so the high-voltage direct-current circuit breaker is easy to realize, large in breaking current capability, high in voltage tolerance level, strong in expandability and low in equipment cost, specifically:
1, when the circuit breaker provided by the present invention runs normally, quick mechanical switches and a few power electronic devices circulate, so the on-state loss is low, and the through-current capability is strong;
2, the circuit breaker provided by the present invention can realize arcless breaking of the mechanical switches, prolong the service lives of the switches, improve the breaking speed of the switches and easily solve the voltage sharing problem when the switches are connected in series;
3, the topology of the circuit breaker provided by the present invention mainly adopts half-controlled power electronic devices, so the circuit breaker is mature in technology, easy to realize and strong in current breaking capability and does not need parallel connection of devices;
4, the capacitor stored energy of the circuit breaker provided by the present invention depends on the reliable turn-off time of the thyristors, and does not influence the performance of the high-speed mechanical switches, so that the size and the cost of the capacitor are greatly reduced;
5, the capacitor of the circuit breaker provided by the present invention can be charged by the system, so that a high-voltage isolating auxiliary power supply is not needed, and the reliability is improved;
6, when the circuit breaker provided by the present invention is applied to a direct-current grid and overcurrent of the system is detected, the high-speed mechanical switches can be broken in advance without waiting for determination of the system, so that the action time when the circuit breaker is applied to the grid is greatly shortened;
7, the circuit breaker provided by the present invention is strong in expansion applicability, and has more obvious technical and economical advantages when being applied to high-voltage levels; and
8, the circuit breaker provided by the present invention is novel in structure, simple in control, flexible in application, quick in action, low in equipment cost and high in voltage tolerance level, and is easily expanded to direct-current grids of different voltage levels, including traditional ultrahigh-voltage direct-current grids.

### Brief Description of the Drawings

Fig. 1 is a topological structural diagram of a passive type high voltage DC circuit breaker provided by the present invention;
Fig. 2 is Embodiment I of a full-controlled device module provided by the present invention;
Fig. 3 is Embodiment II of a full-controlled device module provided by the present invention;
Fig. 4 is Embodiment III of a full-controlled device module provided by the present invention;
Fig. 5 is a structural diagram of an embodiment indicating that a full-controlled device in a full-controlled device module provided by the present invention adopts IGCTs;
Fig. 6 is a schematic diagram of a grounding short-circuit fault in a direct-current system provided by the present invention.

### Detailed Description of the Embodiments

The specific implementations of the present invention will be further described in detail below in combination with the accompanying drawings.

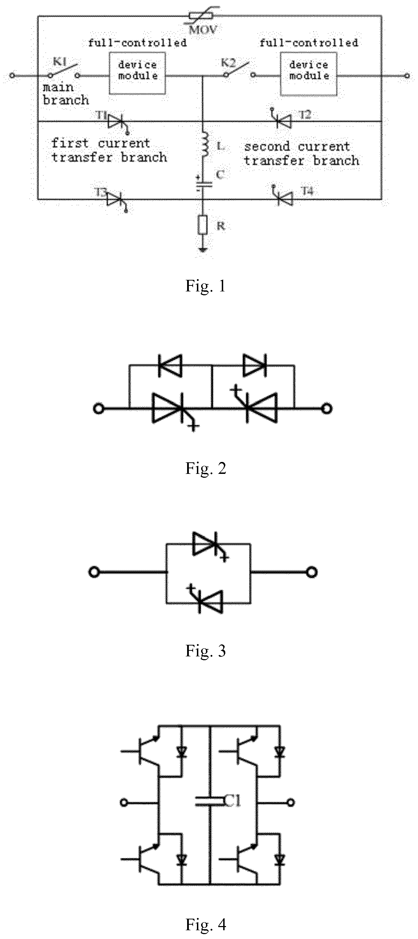

A topological structural diagram of a passive type high voltage DC circuit breaker provided by the present invention is as shown in Fig. 1. The high-voltage direct-current circuit breaker is connected in series to a direct-current system via a port 1 or 2, and includes an energy absorption branch, a main branch and current transfer branches connected in parallel, wherein the current transfer branches include a first current transfer branch and a second current transfer branch; the energy absorption branch is composed of a nonlinear resistor; the high-voltage direct-current circuit breaker is connected in series to the direct-current system, and the main branch includes at least two groups of high-speed mechanical switches and at least two groups of full-controlled device modules connected in series. The two groups of high-speed mechanical switches are expressed as high-speed mechanical switches K1 and K2.

Each full-controlled device module is composed of full-controlled devices inversely connected in series, and two ends of each full-controlled device are respectively inversely connected in parallel with a free-wheeling diode, as shown in Fig. 2; or each full-controlled device module is composed of full-controlled devices inversely connected in parallel, as shown in Fig. 3; or each full-controlled device module has a bridge-type structure composed of full-controlled devices and a capacitor C1, and two ends of each full-controlled device are respectively inversely connected in parallel with a free-wheeling diode, as shown in Fig. 4. The adopted full-controlled devices may be IGCTs, IGBTs or GTOs. When each full-controlled device module is composed of full-controlled devices inversely connected in series, the two groups of full-controlled devices are respectively expressed as a first full-controlled device, a second full-controlled device, a third full-controlled device and a fourth full-controlled device.

When the full-controlled device modules are composed of two groups of full-controlled devices inversely connected in parallel, the two groups of full-controlled devices are respectively expressed as a fifth full-controlled device, a sixth full-controlled device, a seventh full-controlled device and an eighth full-controlled device.

The full-controlled device modules, which have a full-bridge structure composed of four full-controlled devices and a capacitor C1, are respectively expressed as a ninth full-controlled device module and a tenth full-controlled device module; the full-bridge structure includes two bridge arms, each bridge arm is composed of two full-controlled devices connected in series, and two ends of each full-controlled device are respectively inversely connected in parallel with a free-wheeling diode; and the capacitor C1 is connected between the midpoints of the two bridge arms.

Each of the first current transfer branch and the second current transfer branch is composed of two groups of opposite thyristor valves connected in series; a capacitor C and an inductor L connected in series are connected to the midpoint of the first current transfer branch and the second current transfer branch, and are grounded by a large resistor R.

The thyristor valves are respectively a thyristor valve T1, a thyristor valve T2, a thyristor valve T3 and a thyristor valve T4, wherein the thyristor valve T1 and the thyristor valve T2 are inversely connected in series to form the first current transfer branch, and the thyristor valve T3 and the thyristor valve T4 are inversely connected in series to form the second current transfer branch. The nonlinear resistor is a lightning arrester.

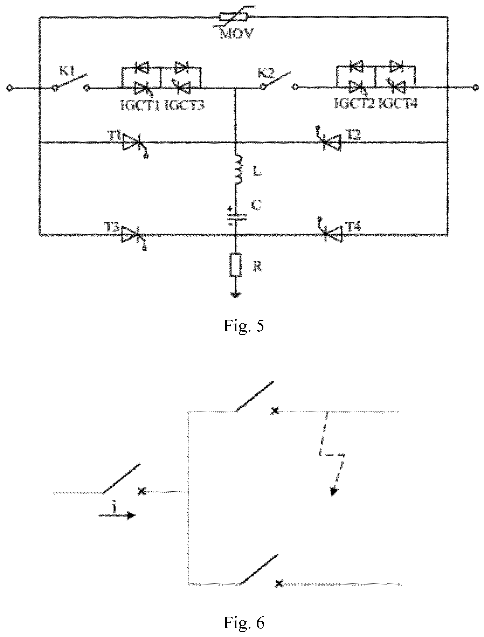

The working principle of the high-voltage direct-current circuit breaker will be illustrated by using the embodiment of the full-controlled device modules shown in Fig. 2. As shown in Fig. 5, the devices are preferably IGCTs. The using method of the circuit breaker will be illustrated by using the direct-current system shown in Fig. 6.
1) When the direct-current system runs normally, the current direction is from left to right, the high-speed mechanical switches K1 and K2 are turned on, trigger pulse is applied to the full-controlled devices in the full-controlled device modules, and the current of the main branch flows through the high-speed mechanical switches and the IGCT1 and IGCT2 (in the same direction as the current). If the full-controlled device modules can tolerate the on-state voltage drop higher than the first current transfer branch so that the thyristors are successfully turned on while the full-controlled device modules are not damaged, the current can be transferred smoothly, so the required voltage tolerance is very low, one module unit can meet the requirement of normal operation, the number of power electronic devices used in the main branch is reduced, and the loss of the circuit breaker in normal operation is low. During normal operation of the system, the capacitor connected to the midpoint of the two bridge arms of the current transfer branches is charged by the large resistor.
2) The action time sequence of the circuit breaker in the system fault will be illustrated, taking a grounding short-circuit fault on the right of the circuit breaker as an example.
   (1) When the direct-current system has the grounding short-circuit fault as shown in Fig. 6, long trigger pulse is applied to the thyristor valve T1 in the first current transfer branch, meanwhile, IGCT1 and IGCT3 are blocked, then when the forward voltage is higher than the lowest voltage required for triggering the valve T1, the valve T1 is turned on, the current of the main branch is transferred to the valve T1 till crossing zero, and a breaking signal of the high-speed mechanical switch is sent out. The short-circuit current flows through T1-K2-IGCT2, the turn-on time of the thyristor valve T1 is maintained (not less than 2ms), and the high-speed mechanical switch can generate enough open distance to tolerate overvoltage of the system, and waits for a breaking command from the system or itself.
   (2) If the system determines or comes to the situation that the breaking current extreme value of the circuit breaker itself needs the circuit breaker, the thyristor valve T3 in the second current transfer branch is triggered, the capacitor injects inverse current to the thyristor valve T1 via the inductor, the short-circuit current is transferred from the valve T1 to the valve T3, and the T1 is turned off when the current thereof is reduced to zero, wherein the capacitor needs to store enough energy for ensuring reliable turn-off of the valve T1, and the required high-voltage capacitance value can be greatly reduced by using the thyristor with short turn-off time. After the valve T1 is turned off, the short-circuit current inversely charges the capacitor via T3-C-L-K2-IGCT2, the polarity of the capacitor is inverted, the lightning arrester acts when the short-circuit current reaches a lightning arrester action threshold, the short-circuit current is transferred to the lightning arrester, the valve T3 is turned off, the energy of the system is consumed and absorbed by the lightning arrester, and the circuit breaker accomplishes breaking. After the thyristor valve T3 is turned off, the energy stored by the capacitor is released by a grounding resistor via the IGCT4, the IGCT2 and the IGCT4 are blocked after the energy is released, and the high-speed switch K2 is broken.
   (3) If the system determines that the action of the circuit breaker is not needed, the high-speed mechanical switch K1 of the main branch is turned on again, the IGCT1 and the IGCT3 are triggered, the current is transferred to the main branch, the valve T1 cannot be normally turned on because the on-state voltage of the main branch drops, the valve T1 is turned off, and the circuit breaker begins stable operation.

When the full-controlled device modules as shown in Fig. 3 are adopted, the using method is the same as above. Specifically:
1) when the direct-current system runs normally, the two groups of high-speed mechanical switches are turned on, the full-controlled devices in the full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
   (1) when the direct-current system has a grounding short-circuit fault at the right port of the circuit breaker, long trigger pulse is applied to the thyristor valve T1 in the first current transfer branch, meanwhile, the fifth and seventh full-controlled devices are blocked, then when the forward voltage is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the sixth full-controlled device, the turn-on time of the thyristor valve T1 is maintained to be not less than 2ms, and the high-speed mechanical switch K1 can generate enough open distance to tolerate recovery overvoltage of the system, and waits for a breaking command from the direct-current system or itself;
   (2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the sixth full-controlled device, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the eighth full-controlled device, the sixth and eighth full-controlled devices are blocked after the energy is released, and the high-speed mechanical switch K2 is broken; and
   (3) if the system determines that the action of the high-voltage direct-current circuit breaker is not needed, the high-speed mechanical switch K1 of the main branch is turned on again, the fifth and seventh full-controlled devices are triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

The operation process of the topological circuit breaker adopting the structural modules in Fig. 4 is slightly different in that after the IGCT in the same direction as the current is turned off, the current of the main branch charges the capacitor via the diode, and is transferred to the first transfer branch till the valve in the first current transfer branch is turned on. Specifically:
1) when the direct-current system runs normally, two groups of high-speed mechanical switches are turned on, the full-controlled devices in the ninth and tenth full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
   (1) when the direct-current system has a grounding short-circuit fault at the right port of the circuit breaker, long trigger pulse is applied to the thyristor valve T1 in the first current transfer branch, meanwhile, the ninth full-controlled device module is blocked, the current of the main branch charges the capacitor in the ninth full-controlled device module via the inversely parallel-connected diodes of the full-controlled devices, then when the voltage of the capacitor is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the tenth full-controlled device module, the turn-on time of the thyristor valve T1 is maintained to be not less than 2ms, and the high-speed mechanical switch K1 can generate enough open distance to tolerate recovery overvoltage of the system, and waits for a breaking command from the direct-current system or itself;
   (2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the tenth full-controlled device module, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the tenth full-controlled device module, the tenth full-controlled device module is blocked after the energy is released, and the high-speed mechanical switch K2 is broken; and
   (3) if the system determines that the action of the high-voltage direct-current circuit breaker is not needed, the high-speed mechanical switch K1 of the main branch is turned on again, the ninth full-controlled device module is triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

Finally, it should be noted that the above embodiments are merely used for illustrating the technical solutions of the present invention, rather than limiting the present invention; though the present invention is illustrated in detail with reference to the aforementioned embodiments, it should be understood by those of ordinary skill in the art that modifications or equivalent substitutions still can be made to the specific implementations of the present invention; and any modifications or equivalent substitutions without departing from the spirit and scope of the present invention shall fall into the scope of the claims of the present invention.

## Claims

1. A passive type high voltage DC circuit breaker, comprising an energy absorption branch, a main branch and current transfer branches connected in parallel, wherein the current transfer branches comprise a first current transfer branch and a second current transfer branch; the energy absorption branch is composed of a nonlinear resistor; the high-voltage direct-current circuit breaker is connectable in series to a direct-current system; and the main branch comprises at least two groups of high-speed mechanical switches and at least two groups of full-controlled device modules connected in series; wherein each of the first current transfer branch and the second current transfer branch is composed of two groups of opposite thyristor valves connected in series; wherein a capacitor C and an inductor L connected in series are connected to the midpoint of the first current transfer branch and the second current transfer branch, **characterized in that** the capacitor C and the inductor L are grounded by a resistor.

2. The passive type high voltage DC circuit breaker of claim 1, wherein each full-controlled device module is composed of full-controlled devices inversely connected in series, and two ends of each full-controlled device are respectively inversely connected in parallel with a free-wheeling diode; the two groups of high-speed mechanical switches are expressed as high-speed mechanical switches K1 and K2, and the two groups of full-controlled devices are respectively expressed as a first full-controlled device, a second full-controlled device, a third full-controlled device and a fourth full-controlled device.

3. The passive type high voltage DC circuit breaker of claim 1, wherein the full-controlled device modules are composed of two groups of full-controlled devices inversely connected in parallel; and the two groups of full-controlled devices are respectively expressed as a fifth full-controlled device, a sixth full-controlled device, a seventh full-controlled device and an eighth full-controlled device.

4. The passive type high voltage DC circuit breaker of claim 1, wherein the full-controlled device modules have a full-bridge structure composed of four full-controlled devices and a capacitor C1, and are respectively expressed as a ninth full-controlled device module and a tenth full-controlled device module; the full-bridge structure comprises two bridge arms, each bridge arm is composed of two full-controlled devices connected in series, and two ends of each full-controlled device are respectively inversely connected in parallel with a free-wheeling diode; and the capacitor C1 is connected between the midpoints of the two bridge arms.

5. The passive type high voltage DC circuit breaker of claim 4, wherein the full-controlled devices comprise IGCT devices, IGBT devices and GTO devices.

6. The passive type high voltage DC circuit breaker of claim 1, wherein the thyristor valves are respectively a thyristor valve T1, a thyristor valve T2, a thyristor valve T3 and a thyristor valve T4; the thyristor valve T1 and the thyristor valve T2 are inversely connected in series to form the first current transfer branch; and the thyristor valve T3 and the thyristor valve T4 are inversely connected in series to form the second current transfer branch.

7. The passive type high voltage DC circuit breaker of claim 1, wherein the nonlinear resistor is a lightning arrester.

8. The passive type high voltage DC circuit breaker of claim 2, wherein when the full-controlled device modules are composed of full-controlled devices inversely connected in series, the implementation method comprises:
1) when the direct-current system runs normally, the two groups of high-speed mechanical switches are turned on, the full-controlled devices in the full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
(1) when the direct-current system has a grounding short-circuit fault at the right port of the circuit breaker, long trigger pulse is applied to the thyristor valve T1 in the first current transfer branch, meanwhile, the first and third full-controlled devices are blocked, then when the forward voltage is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the second full-controlled device, the turn-on time of the thyristor valve T1 is maintained to be not less than 2ms, and the high-speed mechanical switch K1 can generate enough open distance to tolerate recovery overvoltage of the direct-current system, and waits for a breaking command from the direct-current system or itself;
(2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the second full-controlled device, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the fourth full-controlled device, the second and fourth full-controlled devices are blocked after the energy is released, and the high-speed mechanical switch K2 is broken; and
(3) if the system determines that the action of the high-voltage direct-current circuit breaker is not needed, the high-speed mechanical switch K1 of the main branch is turned on again, the first and third full-controlled devices are triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

9. The passive type high voltage DC circuit breaker of claim 3, , wherein when the full-controlled device modules are composed of full-controlled devices inversely connected in parallel, the implementation method comprises:
1) when the direct-current system runs normally, the two groups of high-speed mechanical switches are turned on, the full-controlled devices in the full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
(1) when the direct-current system has a grounding short-circuit fault at the right port of the circuit breaker, long trigger pulse is applied to the thyristor valve T1 in the first current transfer branch, meanwhile, the fifth and seventh full-controlled devices are blocked, then when the forward voltage is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the sixth full-controlled device, the turn-on time of the thyristor valve T1 is maintained to be not less than 2ms, and the high-speed mechanical switch K1 can generate enough open distance to tolerate recovery overvoltage of the direct-current system, and waits for a breaking command from the direct-current system or itself;
(2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the sixth full-controlled device, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the eighth full-controlled device, the sixth and eighth full-controlled devices are blocked after the energy is released, and the high-speed mechanical switch K2 is broken; and
(3) if the system determines that the action of the high-voltage direct-current circuit breaker is not needed, the high-speed mechanical switch K1 of the main branch is turned on again, the fifth and seventh full-controlled devices are triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

10. The passive type high voltage DC circuit breaker of claim 4, , wherein when the full-controlled device modules adopt a full-bridge structure composed of four full-controlled devices and a capacitor C1, the implementation method comprises:
1) when the direct-current system runs normally, the two groups of high-speed mechanical switches are turned on, the full-controlled devices in the ninth and tenth full-controlled device modules are in a trigger state, and the current of the main branch flows through the high-speed mechanical switches and the full-controlled devices in the same direction as the current; during normal operation of the direct-current system, the capacitor C connected to the midpoint of the first current transfer branch and the second current transfer branch is charged by the resistor; and
2) under a single-side short-circuit fault of the direct-current system,
(1) when the direct-current system has a grounding short-circuit fault at the right port of the circuit breaker, long trigger pulse is applied to the thyristor valve T1 in the first current transfer branch, meanwhile, the ninth full-controlled device module is blocked, the current of the main branch charges the capacitor in the ninth full-controlled device module via the inversely parallel-connected diodes of the full-controlled devices, then when the voltage of the capacitor is higher than the lowest voltage required for triggering the thyristor valve T1, the thyristor valve T1 is turned on, the current flowing through the high-speed mechanical switch K1 in the main branch is transferred to the thyristor valve T1 till crossing zero, and a breaking signal of the high-speed mechanical switch K1 is sent out; the short-circuit current flows through the thyristor valve T1, the high-speed mechanical switch K2 and the tenth full-controlled device module, the turn-on time of the thyristor valve T1 is maintained to be not less than 2ms, and the high-speed mechanical switch K1 can generate enough open distance to tolerate recovery overvoltage of the direct-current system, and waits for a breaking command from the direct-current system or itself;
(2) if the direct-current system determines or comes to the situation that the breaking current extreme value of the circuit breaker itself needs the action of the high-voltage direct-current circuit breaker, the thyristor valve T3 in the second current transfer branch is triggered, the capacitor C injects inverse current to the thyristor valve T1 via the inductor L, the short-circuit current is transferred from the thyristor valve T1 to the thyristor valve T3, and the thyristor valve T1 is turned off when the current thereof is reduced to zero; after the thyristor valve T1 is turned off, the short-circuit current inversely charges the capacitor C via the thyristor valve T3, the capacitor C, the inductor L, the high-speed mechanical switch K2 and the tenth full-controlled device module, the polarity of the capacitor C is inverted, the lightning arrester acts when the short-circuit current reaches a lightning arrester action threshold, the short-circuit current is transferred to the lightning arrester, the thyristor valve T3 is turned off, the energy of the direct-current system is consumed and absorbed by the lightning arrester, and the circuit breaker accomplishes breaking; after the thyristor valve T3 is turned off, the energy stored by the capacitor C is released by a grounding resistor via the tenth full-controlled device module, the tenth full-controlled device module is blocked after the energy is released, and the high-speed mechanical switch K2 is broken; and
(3) if the system determines that the action of the high-voltage direct-current circuit breaker is not needed, the high-speed mechanical switch K1 of the main branch is turned on again, the ninth full-controlled device module is triggered, the current is transferred to the main branch, the thyristor valve T1 cannot be normally turned on because the on-state voltage of the main branch drops, the thyristor valve T1 is turned off, and the high-voltage direct-current circuit breaker begins stable operation.

## Patentansprüche

1. Passiver Hochspannungs-DC-Stromunterbrecher mit einem Energieabsorptionszweig, einem Hauptzweig und parallel geschalteten Stromübertragungszweigen, wobei die Stromübertragungszweige einen ersten Stromübertragungszweig und einen zweiten Stromübertragungszweig umfassen; der Energieabsorptionszweig mit einem nichtlinearen Widerstand gebildet ist; der Hochspannungs-Gleichstrom-Stromunterbrecher in Serie mit einem Gleichstromsystem verbindbar ist; und der Hauptzweig mindestens zwei Gruppen mit mechanischen Hochgeschwindigkeitsschaltern und mindestens zwei Gruppen von vollgesteuerten Bauteilmodulen, die in Serie verbunden sind, umfasst; wobei jeder von dem ersten Stromübertragungszweig und dem zweiten Stromübertragungszweig aus zwei Gruppen mit entgegengesetzten Thyristorventilen, die in Serie verbunden sind, gebildet ist; wobei ein Kondensator C und eine Induktivität L, die in Serie verbunden sind, mit dem Mittelpunkt des ersten Stromübertragungszweigs und des zweiten Stromübertragungszweigs verbunden sind, **dadurch gekennzeichnet, dass** der Kondensator C und die Induktivität L über einen Widerstand geerdet sind.

2. Passiver Hochspannungs-DC-Stromunterbrecher nach Anspruch 1, wobei jedes vollgesteuerte Bauteilmodul aus vollgesteuerten Bauteilen, die in Serie invers miteinander verbunden sind, gebildet ist und zwei Enden jedes vollgesteuerten Bauteils jeweils parallel mit einer Freilaufdiode invers verbunden sind; die zwei Gruppen mechanischer Hochgeschwindigkeitsschalter als mechanische Hochgeschwindigkeitsschalter K1 und K2 bezeichnet werden und die zwei Gruppen vollgesteuerter Bauteile entsprechend als ein erstes vollgesteuertes Bauteil und ein zweites vollgesteuertes Bauteil, ein drittes vollgesteuertes Bauteil und ein viertes vollgesteuertes Bauteil bezeichnet werden.

3. Passiver Hochspannungs-DC-Stromunterbrecher nach Anspruch 1, wobei die vollgesteuerten Bauteilmodule aus zwei Gruppen vollgesteuerter Bauteile gebildet sind, die parallel invers verbunden sind; und die zwei Gruppen vollgesteuerter Bauteile entsprechend als ein fünftes vollgesteuertes Bauteil, ein sechstes vollgesteuertes Bauteil, ein siebtes vollgesteuertes Bauteil und ein achtes vollgesteuertes Bauteil bezeichnet werden.

4. Passiver Hochspannungs-DC-Stromunterbrecher nach Anspruch 1, wobei die vollgesteuerten Bauteilmodule eine Vollbrückenstruktur, gebildet aus vier vollgesteuerten Bauteilen und einem Kondensator C1, aufweisen und entsprechend als neuntes vollgesteuertes Bauteilmodul und zehntes vollgesteuertes Bauteilmodul bezeichnet werden; die Vollbrückenstruktur zwei Brückenarme umfasst, wobei jeder Brückenarm jeweils mit zwei vollgesteuerten Bauteilen, die in Serie verbunden sind, gebildet ist und zwei Enden jedes vollgesteuerten Bauteils jeweils parallel mit einer Freilaufdiode invers verbunden sind; und der Kondensator C1 zwischen den Mittelpunkten der zwei Brückenarme verbunden ist.

5. Passiver Hochspannungs-DC-Stromunterbrecher nach Anspruch 4, wobei die vollgesteuerten Bauteile IGCT-Bauteile, IGBT-Bauteile und GTO-Bauteile umfassen.

6. Passiver Hochspannungs-DC-Stromunterbrecher nach Anspruch 1, wobei die Thyristorventile entsprechend ein Thyristorventil T1, ein Thyristorventil T2, ein Thyristorventil T3 und ein Thyristorventil T4 sind; das Thyristorventil T1 und das Thyristorventil T2 in Serie invers miteinander verbunden sind, um den ersten Stromübertragungszweig zu bilden; das Thyristorventil T3 und das Thyristorventil T4 in Serie invers miteinander verbunden sind, um den zweiten Stromübertragungszweig zu bilden.

7. Passiver Hochspannungs-DC-Stromunterbrecher nach Anspruch 1, wobei der nichtlineare Widerstand ein Überspannungsableiter ist.

8. Passiver Hochspannungs-DC-Stromunterbrecher nach Anspruch 2, wobei, wenn die vollgesteuerten Bauelementmodule aus vollgesteuerten Modulen, die in Serie invers miteinander verbunden sind, gebildet sind, das Implementierungsverfahren umfasst:
1) wenn das Gleichstromsystem normal läuft, dann sind die zwei Gruppen mechanischer Hochgeschwindigkeitsschalter eingeschaltet, die vollgesteuerten Bauteile in den vollgesteuerten Bauteilmodulen in einem Triggerzustand und der Strom des Hauptzweigs fließt durch die mechanischen Hochgeschwindigkeitsschalter und die vollgesteuerten Bauteile in der gleichen Richtung wie der Strom; während des normalen Betriebs des Gleichstromsystems wird der Kondensator C, der mit dem Mittelpunkt des ersten Stromübertragungszweigs und des zweiten Stromübertragungszweigs verbunden ist, über den Widerstand geladen; und
2) bei einem einseitigen Kurzschlussfehler des Gleichstromsystems,
(1) wenn das Gleichstromsystem einen Erdungskurzschlussfehler am rechten Anschluss des Stromunterbrechers aufweist, wird ein langer Triggerpuls für das Thyristorventil T1 im ersten Stromübertragungszweig bereitgestellt, währenddessen die ersten und dritten vollgesteuerten Bauteile blockiert werden, dann, wenn die Vorwärtsspannung höher ist als die geringste Spannung, die zum Triggern des Thyristorventils T1 nötig ist, wird das Thyristorventil T1 eingeschaltet, der Strom, der durch den mechanischen Hochgeschwindigkeitsschalter K1 in den Hauptzweig fließt, wird zum Thyristorventil T1 bis zum Überschreiten von 0 übertragen und ein Unterbrechungssignal des mechanischen Hochgeschwindigkeitsschalters K1 wird ausgesendet; der Kurzschlussstrom fließt durch das Thyristorventil T1, den mechanischen Hochgeschwindigkeitsschalter K2 und das zweite vollgesteuerte Bauteil, die Einschaltzeit des Thyristorventils T1 wird aufrechterhalten, um nicht weniger als 2 ms zu betragen, und der mechanische Hochgeschwindigkeitsschalter K1 kann eine ausreichende Öffnungsdistanz erzeugen, um eine Erholung der Überspannung des Gleichstromsystems zu tolerieren, und wartet auf ein Unterbrechungskommando vom Gleichstromsystem oder sich selbst;
(2) wenn das Gleichstromsystem bestimmt oder in eine Situation kommt, dass der Unterbrechungsstromextremwert des Stromunterbrechers selbst das Handeln des Hochspannungs-Gleichstrom-Stromunterbrechers benötigt, wird das Thyristorventil T3 im zweiten Stromübertragungszweig getriggert, die Kapazität C injiziert inversen Strom in das Thyristorventil T1 über die Induktivität L, der Kurzschlussstrom wird vom Thyristorventil T1 zum Thyristorventil T3 übertragen und das Thyristorventil T1 wird abgeschaltet, wenn der Strom davon auf 0 reduziert ist; nachdem das Thyristorventil T1 abgeschaltet ist, lädt der Kurzschlussstrom den Kondensator C über das Thyristorventil T3, den Kondensator C, die Induktivität L, den mechanischen Hochgeschwindigkeitsschalter K2 und das zweite vollgesteuerte Bauteil invers, die Polarität des Kondensators C wird invertiert, der Überspannungsableiter handelt, wenn der Kurzschlussstrom einen Überspannungsableiterhandlungsschwellenwert erreicht, der Kurzschlussstrom wird zum Überspannungsableiter transferiert, das Thyristorventil T3 wird abgeschaltet, die Energie des Gleichstromsystems wird vom Überspannungsableiter verbraucht und absorbiert und der Stromunterbrecher erreicht eine Unterbrechung; nachdem das Thyristorventil T3 abgeschaltet ist, wird die Energie, die im Kondensator C gespeichert ist, durch einen Erdungswiderstand über das vierte vollgesteuerte Bauteil freigegeben, das zweite und vierte vollgesteuerte Bauteil werden blockiert, nachdem die Energie freigegeben wurde und der mechanische Hochgeschwindigkeitsschalter K2 unterbrochen ist; und
(3) wenn das System bestimmt, dass eine Handlung des Hochspannungs-Gleichstrom-Stromunterbrechers nicht benötigt wird, wird der mechanische Hochgeschwindigkeitsschalter K1 des Hauptzweigs wieder eingeschaltet, das erste und dritte vollgesteuerte Bauteil werden getriggert, der Strom wird zum Hauptzweig transferiert, das Thyristorventil T1 kann nicht normal eingeschaltet werden, da die An-Zustands-Spannung des Hauptzweigs fällt, das Thyristorventil T1 wird abgeschaltet und der Hochspannungs-Gleichstrom-Stromunterbrecher beginnt einen stabilen Betrieb.

9. Passiver Hochspannungs-DC-Stromunterbrecher nach Anspruch 3, wobei, wenn die vollgesteuerten Bauteilmodule aus vollgesteuerten Bauteilen gebildet sind, die parallel invers verbunden sind, das Implementierungsverfahren umfasst:
1) wenn das Gleichstromsystem normal läuft, dann sind die zwei Gruppen mechanischer Hochgeschwindigkeitsschalter eingeschaltet, die vollgesteuerten Bauteile in den vollgesteuerten Bauteilmodulen in einem Triggerzustand und der Strom des Hauptzweigs fließt durch die mechanischen Hochgeschwindigkeitsschalter und die vollgesteuerten Bauteile in der gleichen Richtung wie der Strom; während des normalen Betriebs des Gleichstromsystems wird der Kondensator C, der mit dem Mittelpunkt des ersten Stromübertragungszweigs und des zweiten Stromübertragungszweigs verbunden ist, über den Widerstand geladen; und
2) bei einem einseitigen Kurzschlussfehler des Gleichstromsystems,
(1) wenn das Gleichstromsystem einen Erdungskurzschlussfehler am rechten Anschluss des Stromunterbrechers aufweist, wird ein langer Triggerpuls für das Thyristorventil T1 im ersten Stromübertragungszweig bereitgestellt, währenddessen die fünften und siebten vollgesteuerten Bauteile blockiert werden, dann, wenn die Vorwärtsspannung höher ist als die geringste Spannung, die zum Triggern des Thyristorventils T1 nötig ist, wird das Thyristorventil T1 eingeschaltet, der Strom, der durch den mechanischen Hochgeschwindigkeitsschalter K1 in den Hauptzweig fließt, wird zum Thyristorventil T1 bis zum Überschreiten von 0 übertragen und ein Unterbrechungssignal des mechanischen Hochgeschwindigkeitsschalters K1 wird ausgesendet; der Kurzschlussstrom fließt durch das Thyristorventil T1, den mechanischen Hochgeschwindigkeitsschalter K2 und das sechste vollgesteuerte Bauteil, die Einschaltzeit des Thyristorventils T1 wird aufrechterhalten, um nicht weniger als 2 ms zu betragen, und der mechanische Hochgeschwindigkeitsschalter K1 kann eine ausreichende Öffnungsdistanz erzeugen, um eine Erholung der Überspannung des Gleichstromsystems zu tolerieren, und wartet auf ein Unterbrechungskommando vom Gleichstromsystem oder sich selbst;
(2) wenn das Gleichstromsystem bestimmt oder in eine Situation kommt, dass der Unterbrechungsstromextremwert des Stromunterbrechers selbst das Handeln des Hochspannungs-Gleichstrom-Stromunterbrechers benötigt, wird das Thyristorventil T3 im zweiten Stromübertragungszweig getriggert, die Kapazität C injiziert inversen Strom in das Thyristorventil T1 über die Induktivität L, der Kurzschlussstrom wird vom Thyristorventil T1 zum Thyristorventil T3 übertragen und das Thyristorventil T1 wird abgeschaltet, wenn der Strom davon auf 0 reduziert ist; nachdem das Thyristorventil T1 abgeschaltet ist, lädt der Kurzschlussstrom den Kondensator C über das Thyristorventil T3, den Kondensator C, die Induktivität L, den mechanischen Hochgeschwindigkeitsschalter K2 und das sechste vollgesteuerte Bauteil invers, die Polarität des Kondensators C wird invertiert, der Überspannungsableiter handelt, wenn der Kurzschlussstrom einen Überspannungsableiterhandlungsschwellenwert erreicht, der Kurzschlussstrom wird zum Überspannungsableiter transferiert, das Thyristorventil T3 wird abgeschaltet, die Energie des Gleichstromsystems wird vom Überspannungsableiter verbraucht und absorbiert und der Stromunterbrecher erreicht eine Unterbrechung; nachdem das Thyristorventil T3 abgeschaltet ist, wird die Energie, die im Kondensator C gespeichert ist, durch einen Erdungswiderstand über das achte vollgesteuerte Bauteil freigegeben, das sechste und achte vollgesteuerte Bauteil werden blockiert, nachdem die Energie freigegeben wurde und der mechanische Hochgeschwindigkeitsschalter K2 unterbrochen ist; und
(3) wenn das System bestimmt, dass eine Handlung des Hochspannungs-Gleichstrom-Stromunterbrechers nicht benötigt wird, wird der mechanische Hochgeschwindigkeitsschalter K1 des Hauptzweigs wieder eingeschaltet, das fünfte und siebte vollgesteuerte Bauteil werden getriggert, der Strom wird zum Hauptzweig transferiert, das Thyristorventil T1 kann nicht normal eingeschaltet werden, da die An-Zustands-Spannung des Hauptzweigs fällt, das Thyristorventil T1 wird abgeschaltet und der Hochspannungs-Gleichstrom-Stromunterbrecher beginnt einen stabilen Betrieb.

10. Passiver Hochspannungs-DC-Stromunterbrecher nach Anspruch 4, wobei, wenn das vollgesteuerte Bauteilmodul aus einer Vollbrückenstruktur gebildet ist, die aus vier vollgesteuerten Bauteilen und einem Kondensator C1 gebildet ist, das Implementierungsverfahren umfasst:
1) wenn das Gleichstromsystem normal läuft, dann sind die zwei Gruppen mechanischer Hochgeschwindigkeitsschalter eingeschaltet, die vollgesteuerten Bauteile in den neunten und zehnten vollgesteuerten Bauteilmodulen in einem Triggerzustand und der Strom des Hauptzweigs fließt durch die mechanischen Hochgeschwindigkeitsschalter und die vollgesteuerten Bauteile in der gleichen Richtung wie der Strom; während des normalen Betriebs des Gleichstromsystems wird der Kondensator C, der mit dem Mittelpunkt des ersten Stromübertragungszweigs und des zweiten Stromübertragungszweigs verbunden ist, über den Widerstand geladen; und
2) bei einem einseitigen Kurzschlussfehler des Gleichstromsystems,
(1) wenn das Gleichstromsystem einen Erdungskurzschlussfehler am rechten Anschluss des Stromunterbrechers aufweist, wird ein langer Triggerpuls für das Thyristorventil T1 im ersten Stromübertragungszweig bereitgestellt, währenddessen das neunte vollgesteuerte Bauteilmodul blockiert wird, der Strom des Hauptzweigs lädt den Kondensator im neunten vollgesteuerten Bauteilmodul über die parallel invers verbundenen Dioden des vollgesteuerten Bauteils, dann, wenn die Spannung des Kondensators höher ist als die geringste Spannung, die zum Triggern des Thyristorventils T1 nötig ist, wird das Thyristorventil T1 eingeschaltet, der Strom, der durch den mechanischen Hochgeschwindigkeitsschalter K1 in den Hauptzweig fließt, wird zum Thyristorventil T1 bis zum Überschreiten von 0 übertragen und ein Unterbrechungssignal des mechanischen Hochgeschwindigkeitsschalters K1 wird ausgesendet; der Kurzschlussstrom fließt durch das Thyristorventil T1, den mechanischen Hochgeschwindigkeitsschalter K2 und das zehnte vollgesteuerte Bauteilmodul, die Einschaltzeit des Thyristorventils T1 wird aufrechterhalten, um nicht weniger als 2 ms zu betragen, und der mechanische Hochgeschwindigkeitsschalter K1 kann eine ausreichende Öffnungsdistanz erzeugen, um eine Erholung der Überspannung des Gleichstromsystems zu tolerieren, und wartet auf ein Unterbrechungskommando vom Gleichstromsystem oder sich selbst;
(2) wenn das Gleichstromsystem bestimmt oder in eine Situation kommt, dass der Unterbrechungsstromextremwert des Stromunterbrechers selbst das Handeln des Hochspannungs-Gleichstrom-Stromunterbrechers benötigt, wird das Thyristorventil T3 im zweiten Stromübertragungszweig getriggert, die Kapazität C injiziert inversen Strom in das Thyristorventil T1 über die Induktivität L, der Kurzschlussstrom wird vom Thyristorventil T1 zum Thyristorventil T3 übertragen und das Thyristorventil T1 wird abgeschaltet, wenn der Strom davon auf 0 reduziert ist; nachdem das Thyristorventil T1 abgeschaltet ist, lädt der Kurzschlussstrom den Kondensator C über das Thyristorventil T3, den Kondensator C, die Induktivität L, den mechanischen Hochgeschwindigkeitsschalter K2 und das zehnte vollgesteuerte Bauteilmodul invers, die Polarität des Kondensators C wird invertiert, der Überspannungsableiter handelt, wenn der Kurzschlussstrom einen Überspannungsableiterhandlungsschwellenwert erreicht, der Kurzschlussstrom wird zum Überspannungsableiter transferiert, das Thyristorventil T3 wird abgeschaltet, die Energie des Gleichstromsystems vom Überspannungsableiter wird verbraucht und absorbiert und der Stromunterbrecher erreicht eine Unterbrechung; nachdem das Thyristorventil T3 abgeschaltet ist, wird die Energie, die im Kondensator C gespeichert ist, durch einen Erdungswiderstand über das zehnte vollgesteuerte Bauteilmodul freigegeben, das zehnte vollgesteuerte Bauteilmodul wird blockiert, nachdem die Energie freigegeben wurde und der mechanische Hochgeschwindigkeitsschalter K2 unterbrochen ist; und
(3) wenn das System bestimmt, dass eine Handlung des Hochspannungs-Gleichstrom-Stromunterbrechers nicht benötigt wird, wird der mechanische Hochgeschwindigkeitsschalter K1 des Hauptzweigs wieder eingeschaltet, das neunte vollgesteuerte Bauteilmodul wird getriggert, der Strom wird zum Hauptzweig transferiert, das Thyristorventil T1 kann nicht normal eingeschaltet werden, da die An-Zustands-Spannung des Hauptzweigs fällt, das Thyristorventil T1 wird abgeschaltet und der Hochspannungs-Gleichstrom-Stromunterbrecher beginnt einen stabilen Betrieb.

## Revendications

1. Disjoncteur à courant continu haute tension de type passif, comprenant une dérivation d'absorption d'énergie, une dérivation principale et des dérivations de transfert de courant connectées en parallèle, dans lequel les dérivations de transfert de courant comprennent une première dérivation de transfert de courant et une seconde dérivation de transfert de courant ; la dérivation d'absorption d'énergie est composée d'un résistor non linéaire ; le disjoncteur à courant continu haute tension peut être connecté en série à un système à courant continu ; et la dérivation principale comprend au moins deux groupes de commutateurs mécaniques grande vitesse et au moins deux groupes de modules de dispositif à commande totale connectés en série ;
dans lequel chacune de la première dérivation de transfert de courant et de la seconde dérivation de transfert de courant est composée de deux groupes de valves de thyristor opposées connectées en série ;
dans lequel un condensateur C et une inductance L connectés en série sont connectés au point milieu de la première dérivation de transfert de courant et de la seconde dérivation de transfert de courant, **caractérisé en ce que** le condensateur C et l'inductance L sont mis à la terre par un résistor.

2. Disjoncteur à courant continu haute tension de type passif selon la revendication 1, dans lequel chaque module de dispositif à commande totale est composé de dispositifs à commande totale connectés inversement en série, et deux extrémités de chaque dispositif à commande totale sont respectivement connectées inversement en parallèle à une diode libre ; les deux groupes de commutateurs mécaniques grande vitesse sont exprimés sous forme de commutateurs mécaniques grande vitesse K1 et K2, et les deux groupes de dispositifs à commande totale sont exprimés respectivement sous forme d'un premier dispositif à commande totale, d'un deuxième dispositif à commande totale, d'un troisième dispositif à commande totale et d'un quatrième dispositif à commande totale.

3. Disjoncteur à courant continu haute tension de type passif selon la revendication 1, dans lequel les modules de dispositif à commande totale sont composés de deux groupes de dispositifs à commande totale connectés inversement en parallèle ; et les deux groupes de dispositifs à commande totale sont exprimés respectivement sous forme d'un cinquième dispositif à commande totale, d'un sixième dispositif à commande totale, d'un septième dispositif à commande totale et d'un huitième dispositif à commande totale.

4. Disjoncteur à courant continu haute tension de type passif selon la revendication 1, dans lequel les modules de dispositif à commande totale ont une structure en pont complet composée de quatre dispositifs à commande totale et d'un condensateur C1, et sont exprimés respectivement sous forme d'un neuvième module de dispositif à commande totale et d'un dixième module de dispositif à commande totale ; la structure en pont complet comprend deux bras de pont, chaque bras de pont est composé de deux dispositifs à commande totale connectés en série, et deux extrémités de chaque dispositif à commande totale sont respectivement connectées inversement en parallèle à une diode libre ; et le condensateur C1 est connecté entre les points milieu des deux bras de pont.

5. Disjoncteur à courant continu haute tension de type passif selon la revendication 4, dans lequel les dispositifs à commande totale comprennent des dispositifs IGCT, des dispositifs IGBT et des dispositifs GTO.

6. Disjoncteur à courant continu haute tension de type passif selon la revendication 1, dans lequel les valves de thyristor sont respectivement une valve de thyristor T1, une valve de thyristor T2, une valve de thyristor T3 et une valve de thyristor T4 ; la valve de thyristor T1 et la valve de thyristor T2 sont connectées inversement en série pour former la première dérivation de transfert de courant ; et la valve de thyristor T3 et la valve de thyristor T4 sont connectées inversement en série pour former la seconde dérivation de transfert de courant.

7. Disjoncteur à courant continu haute tension de type passif selon la revendication 1, dans lequel le résistor non linéaire est un parafoudre.

8. Disjoncteur à courant continu haute tension de type passif selon la revendication 2, dans lequel, lorsque les modules de dispositif à commande totale sont composés de dispositifs à commande totale connectés inversement en série, le procédé de mise en oeuvre comprend :
1) lorsque le système à courant continu fonctionne normalement, les deux groupes de commutateurs mécaniques grande vitesse sont activés, les dispositifs à commande totale dans les modules de dispositif à commande totale sont dans un état de déclenchement, et le courant de la dérivation principale circule à travers les commutateurs mécaniques grande vitesse et les dispositifs à commande totale dans la même direction que le courant ; pendant un fonctionnement normal du système à courant continu, le condensateur C connecté au point milieu de la première dérivation de transfert de courant et de la seconde dérivation de transfert de courant est chargé par le résistor ; et
2) en cas de défaut de court-circuit d'un seul côté du système à courant continu,
(1) lorsque le système à courant continu a un défaut de court-circuit de mise à la terre au niveau de la porte droite du disjoncteur, une impulsion de déclenchement longue est appliquée à la valve de thyristor T1 dans la première dérivation de transfert de courant, pendant ce temps, les premier et troisième dispositifs à commande totale sont bloqués, puis lorsque la tension directe est plus élevée que la tension la plus basse requise pour déclencher la valve de thyristor T1, la valve de thyristor T1 est activée, le courant circulant à travers le commutateur mécanique grande vitesse K1 dans la dérivation principale est transféré à la valve de thyristor T1 jusqu'à un passage par zéro, et un signal de coupure du commutateur mécanique grande vitesse K1 est envoyé ; le courant de court-circuit circule à travers la valve de thyristor T1, le commutateur mécanique grande vitesse K2 et le second dispositif à commande totale, le temps d'activation de la valve de thyristor T1 est maintenu pour ne pas être inférieur à 2 ms, et le commutateur mécanique grande vitesse K1 peut générer suffisamment de distance ouverte pour tolérer une surtension de rétablissement du système à courant continu, et attend un ordre de coupure en provenance du système à courant continu ou de lui-même ;
(2) si le système à courant continu détermine ou arrive à la situation où la valeur extrême de courant de coupure du disjoncteur lui-même nécessite l'action du disjoncteur à courant continu haute tension, la valve de thyristor T3 dans la seconde dérivation de transfert de courant est déclenchée, le condensateur C injecte un courant inverse à la valve de thyristor T1 via l'inductance L, le courant de court-circuit est transféré de la valve de thyristor T1 à la valve de thyristor T3, et la valve de thyristor T1 est désactivée lorsque son courant est réduit à zéro ; après que la valve de thyristor T1 est désactivée, le courant de court-circuit charge inversement le condensateur C via la valve de thyristor T3, le condensateur C, l'inductance L, le commutateur mécanique grande vitesse K2 et le deuxième dispositif à commande totale, la polarité du condensateur C est inversée, le parafoudre agit lorsque le courant de court-circuit atteint un seuil d'action de parafoudre, le courant de court-circuit est transféré au parafoudre, la valve de thyristor T3 est désactivée, l'énergie du système à courant continu est consommée et absorbée par le parafoudre, et le disjoncteur accomplit la coupure ; après que la valve de thyristor T3 est désactivée, l'énergie stockée par le condensateur C est libérée par un résistor de mise à la terre via le quatrième dispositif à commande totale, les deuxième et quatrième dispositifs à commande totale sont bloqués après que l'énergie est libérée, et le commutateur mécanique grande vitesse K2 est coupé ; et
(3) si le système détermine que l'action du disjoncteur à courant continu haute tension n'est pas nécessaire, le commutateur mécanique grande vitesse K1 de la dérivation principale est activé à nouveau, les premier et troisième dispositifs à commande totale sont déclenchés, le courant est transféré à la dérivation principale, la valve de thyristor T1 ne peut normalement pas être activée puisque la tension d'état passant de la dérivation principale chute, la valve de thyristor T1 est désactivée, et le disjoncteur à courant continu haute tension commence un fonctionnement stable.

9. Disjoncteur à courant continu haute tension de type passif selon la revendication 3, dans lequel, lorsque les modules de dispositif à commande totale sont composés de dispositifs à commande totale connectés inversement en parallèle, le procédé de mise en oeuvre comprend :
1) lorsque le système à courant continu fonctionne normalement, les deux groupes de commutateurs mécaniques grande vitesse sont activés, les dispositifs à commande totale dans les modules de dispositif à commande totale sont dans un état de déclenchement, et le courant de la dérivation principale circule à travers les commutateurs mécaniques grande vitesse et les dispositifs à commande totale dans la même direction que le courant ; pendant un fonctionnement normal du système à courant continu, le condensateur C connecté au point milieu de la première dérivation de transfert de courant et de la seconde dérivation de transfert de courant est chargé par le résistor ; et
2) en cas de défaut de court-circuit d'un seul côté du système à courant continu,
(1) lorsque le système à courant continu a un défaut de court-circuit de mise à la terre au niveau de la porte droite du disjoncteur, une impulsion de déclenchement longue est appliquée à la valve de thyristor T1 dans la première dérivation de transfert de courant, pendant ce temps, les cinquième et septième dispositifs à commande totale sont bloqués, puis lorsque la tension directe est plus élevée que la tension la plus basse requise pour déclencher la valve de thyristor T1, la valve de thyristor T1 est activée, le courant circulant à travers le commutateur mécanique grande vitesse K1 dans la dérivation principale est transféré à la valve de thyristor T1 jusqu'à un passage par zéro, et un signal de coupure du commutateur mécanique grande vitesse K1 est envoyé ; le courant de court-circuit circule à travers la valve de thyristor T1, le commutateur mécanique grande vitesse K2 et le sixième dispositif à commande totale, le temps d'activation de la valve de thyristor T1 est maintenu pour ne pas être inférieur à 2 ms, et le commutateur mécanique grande vitesse K1 peut générer suffisamment de distance ouverte pour tolérer une surtension de rétablissement du système à courant continu, et attend un ordre de coupure en provenance du système à courant continu ou de lui-même ;
(2) si le système à courant continu détermine ou arrive à la situation où la valeur extrême de courant de coupure du disjoncteur lui-même nécessite l'action du disjoncteur à courant continu haute tension, la valve de thyristor T3 dans la seconde dérivation de transfert de courant est déclenchée, le condensateur C injecte un courant inverse à la valve de thyristor T1 via l'inductance L, le courant de court-circuit est transféré de la valve de thyristor T1 à la valve de thyristor T3, et la valve de thyristor T1 est désactivée lorsque son courant est réduit à zéro ; après que la valve de thyristor T1 est désactivée, le courant de court-circuit charge inversement le condensateur C via la valve de thyristor T3, le condensateur C, l'inductance L, le commutateur mécanique grande vitesse K2 et le sixième dispositif à commande totale, la polarité du condensateur C est inversée, le parafoudre agit lorsque le courant de court-circuit atteint un seuil d'action de parafoudre, le courant de court-circuit est transféré au parafoudre, la valve de thyristor T3 est désactivée, l'énergie du système à courant continu est consommée et absorbée par le parafoudre, et le disjoncteur accomplit la coupure ; après que la valve de thyristor T3 est désactivée, l'énergie stockée par le condensateur C est libérée par un résistor de mise à la terre via le huitième dispositif à commande totale, les sixième et huitième dispositifs à commande totale sont bloqués après que l'énergie est libérée, et le commutateur mécanique grande vitesse K2 est coupé ; et
(3) si le système détermine que l'action du disjoncteur à courant continu haute tension n'est pas nécessaire, le commutateur mécanique grande vitesse K1 de la dérivation principale est activé à nouveau, les cinquième et septième dispositifs à commande totale sont déclenchés, le courant est transféré à la dérivation principale, la valve de thyristor T1 ne peut normalement pas être activée puisque la tension d'état passant de la dérivation principale chute, la valve de thyristor T1 est désactivée, et le disjoncteur à courant continu haute tension commence un fonctionnement stable.

10. Disjoncteur à courant continu haute tension de type passif selon la revendication 4, dans lequel, lorsque les modules de dispositif à commande totale adoptent une structure en pont complet composée de quatre dispositifs à commande totale et d'un condensateur C1, le procédé de mise en oeuvre comprend :
1) lorsque le système à courant continu fonctionne normalement, les deux groupes de commutateurs mécaniques grande vitesse sont activés, les dispositifs à commande totale dans les neuvième et dixième modules de dispositif à commande totale sont dans un état de déclenchement, et le courant de la dérivation principale circule à travers les commutateurs mécaniques grande vitesse et les dispositifs à commande totale sont dans la même direction que le courant ; pendant un fonctionnement normal du système à courant continu, le condensateur C connecté au point milieu de la première dérivation de transfert de courant et à la seconde dérivation de transfert de courant est chargé par le résistor ; et
2) en cas de défaut de court-circuit d'un seul côté du système à courant continu,
(1) lorsque le système à courant continu a un défaut de court-circuit de mise à la terre au niveau de la porte droite du disjoncteur, une impulsion de déclenchement longue est appliquée à la valve de thyristor T1 dans la première dérivation de transfert de courant, pendant ce temps, le neuvième dispositif à commande totale est bloqué, le courant de la dérivation principale charge le condensateur dans le neuvième module de dispositif à commande totale via les diodes connectées inversement en parallèle des dispositifs à commande totale, puis lorsque la tension du condensateur est plus élevée que la tension la plus basse requise pour déclencher la valve de thyristor T1, la valve de thyristor T1 est activée, le courant circulant à travers le commutateur mécanique grande vitesse K1 dans la dérivation principale est transféré à la valve de thyristor T1 jusqu'à un passage par zéro, et un signal de coupure du commutateur mécanique grande vitesse K1 est envoyé ; le courant de court-circuit circule à travers la valve de thyristor T1, le commutateur mécanique grande vitesse K2 et le dixième dispositif à commande totale, le temps d'activation de la valve de thyristor T1 est maintenu pour ne pas être inférieur à 2 ms, et le commutateur mécanique grande vitesse K1 peut générer suffisamment de distance ouverte pour tolérer une surtension de rétablissement du système à courant continu, et attend un ordre de coupure en provenance du système à courant continu ou de lui-même ;
(2) si le système à courant continu détermine ou arrive à la situation où la valeur extrême de courant de coupure du disjoncteur lui-même nécessite l'action du disjoncteur à courant continu haute tension, la valve de thyristor T3 dans la seconde dérivation de transfert de courant est déclenchée, le condensateur C injecte un courant inverse à la valve de thyristor T1 via l'inductance L, le courant de court-circuit est transféré de la valve de thyristor T1 à la valve de thyristor T3, et la valve de thyristor T1 est désactivée lorsque son courant est réduit à zéro ; après que la valve de thyristor T1 est désactivée, le courant de court-circuit charge inversement le condensateur C via la valve de thyristor T3, le condensateur C, l'inductance L, le commutateur mécanique grande vitesse K2 et le dixième dispositif à commande totale, la polarité du condensateur C est inversée, le parafoudre agit lorsque le courant de court-circuit atteint un seuil d'action de parafoudre, le courant de court-circuit est transféré au parafoudre, la valve de thyristor T3 est désactivée, l'énergie du système à courant continu est consommée et absorbée par le parafoudre, et le disjoncteur accomplit la coupure ; après que la valve de thyristor T3 est désactivée, l'énergie stockée par le condensateur C est libérée par un résistor de mise à la terre via le dixième module de dispositif à commande totale, le dixième dispositif à commande totale est bloqué après que l'énergie est libérée, et le commutateur mécanique grande vitesse K2 est coupé ; et
(3) si le système détermine que l'action du disjoncteur à courant continu haute tension n'est pas nécessaire, le commutateur mécanique grande vitesse K1 de la dérivation principale est activé à nouveau, le neuvième module de dispositif à commande totale est déclenché, le courant est transféré à la dérivation principale, la valve de thyristor T1 ne peut normalement pas être activée puisque la tension d'état passant de la dérivation principale chute, la valve de thyristor T1 est désactivée, et le disjoncteur à courant continu haute tension commence un fonctionnement stable.
